# EUROPEAN PATENT SPECIFICATION

(11) **EP 1 389 357 B1**
(45) Date of publication and mention of the grant of the patent: **22.06.2011**
(21) Application number: 02751982.6
(22) Date of filing: 16.05.2002
(51) Int. Cl.: H02K 9/16

(54) **TUBE TYPE EXCHANGER WITH MOTOR OR GENERATOR HOUSING**
ROHRFÖRMIGER WÄRMETAUSCHER MIT MOTOR- ODER GENERATORGEHÄUSE
ECHANGEUR DE TYPE TUYAU AVEC CARTER DE GENERATEUR OU DE MOTEUR

(30) Priority: 22.05.2001 US 862910
(43) Date of publication of application: 18.02.2004
(73) Proprietor: Sundyne Corporation, Arvada, CO 80007 (US)
(72) Inventor: JONES, James, Larry, Denver, CO 80209 (US)
(74) Representative: Leckey, David Herbert
(86) International application number: PCT/US2002/015769
(87) International publication number: WO 2002/095901

(56) References cited:
- EP-A- 0 484 548
- FR-A- 1 181 680
- US-A- 2 062 470
- US-A- 2 839 006
- US-A- 2 887 062
- US-A- 2 913 988
- US-A- 3 478 689

## Description

### Technical Field

This invention relates to a cooling device for an electromechanical device, and more particularly, the invention relates to a heat exchanger for an electric motor or generator.

Generators are utilized to convert rotary motion to electricity. Electric motors are utilized to produce rotary motion in response to electricity. Both generators and electric motors produce heat that may rise to an undesirable level. As a result, a cooling device may be required to reduce the heat generated by the electric motor or generator. A typical cooling device incorporates a fluid conduit or chamber for carrying fluid to an area near the motor or generator to absorb heat and reduce the temperature of the electrical mechanical device.

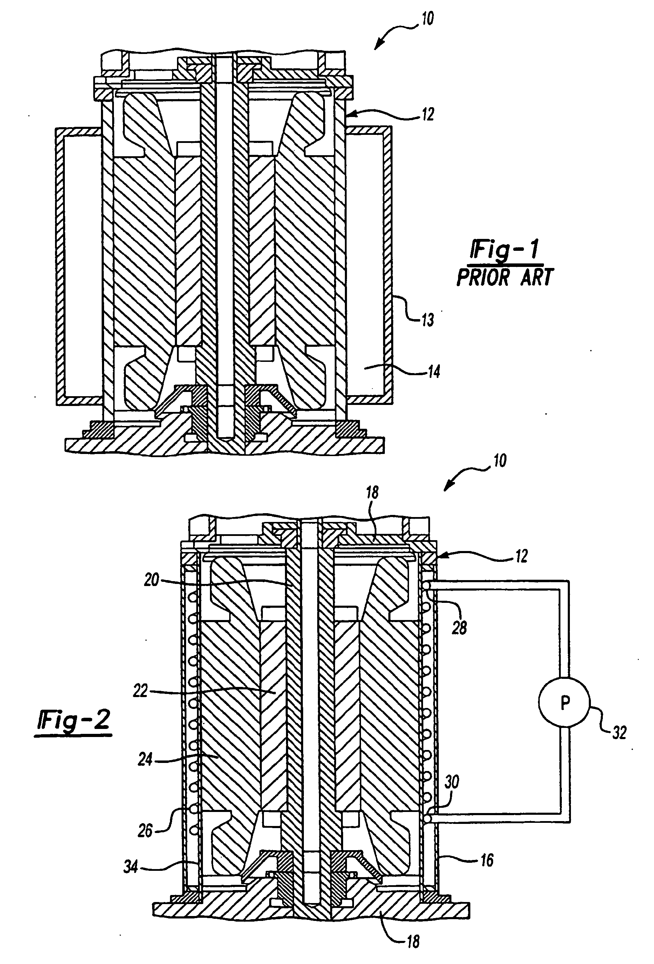

In aerospace applications, customers prefer that the cooling fluid come into contact with stainless steel only to minimize the impact of the corrosive effects of the cooling fluid. A prior art device shown in Figure 1, depicts an electromechanical device 10 such as an electric motor or generator. The electromechanical device includes a housing 12. A cooling chamber 14 is formed by securing an external wall 13 to the housing 12. The housing 12 may be relatively thick to provide structural integrity to the device 10. The external wall 13 may be rather large to cover much of the housing 12. In conformance with customer expectations, the housing 12 and external wall 13 must be constructed from stainless steel. As a result, large portions of the electromechanical device 10 must be constructed from stainless steel thereby adding significant cost to the motor or generator. Therefore, what is needed is an improved cooling device for electric motors and generators that minimizes the use of stainless steel while still providing effective cooling.

A prior art cooling assembly having the features of the preamble of claims 1 and 6 is shown in EP-0484548.

### Disclosure of Invention

There is provided, according to the present invention, a cooling assembly as claimed in claim 1 and a method of cooling as claimed in claim 6.

Accordingly, the preferred embodiment of the above invention provides an improved cooling device for electric motors and generators that minimizes the use of stainless steel while still providing effective cooling.

### Brief Description of Drawings

Other advantages of the present invention can be understood by reference to the following detailed description when considered in connection with the accompanying drawings wherein:
Figure 1 is a cross-sectional view of a prior art electromechanical device such as an electric motor or generator;
Figure 2 is a cross-sectional view of an electromechanical device not according to the present invention;
Figure 3A is an enlarged cross-sectional view of an arrangement not according to the present invention; and
Figure 3B is an enlarged cross-sectional view of an embodiment of the present invention.

### Best Mode for Carrying Out the Invention

An electromechanical assembly 10, such as an electric motor or generator, is shown in Figure 2. The assembly 10 includes a housing 12 having a wall portion 16 and opposing end portions 18 secured to the wall portion 16. Preferably, the wall portion 16 is cylindrical in shape. A shaft 20 is supported by the end portions 18 for rotation relative to the housing 12. The shaft 20 includes wire windings 22. A magnetic field member 24 is arranged about the shaft 20 and windings 22 within the housing 12 and preferably, adjacent to the wall portions 16.

The electromechanical assembly 10 may be either an electric motor or a generator. In the case of an electric motor, the magnetic field member 24 is a stator that carries the current which produces a magnetic field. The windings 22 and shaft 20 form a rotor which rotates in response to the magnetic field produced by the stator. In the case of a generator, the shaft 20 is rotationally driven by an external drive. They windings 22 have current flowing therethrough, which produces a magnetic field that generates a current in the magnetic field member 24 thereby producing electricity.

A cooling device not according to the present invention is shown in Figure 2. The cooling device includes a tube, preferably in the shape of a helical cooling coil 26, which has an inlet 28 and an outlet 30. A pump 32 is fluidly connected to the inlet 28 and outlet 30 pumping fluid through the helical coil for absorbing heat produced by the electromechanical device 10. As shown in Figure 2, the helical coil 26 is secured to a thin shell 34 that is arranged between the end portions 18 and spaced from the magnetic field member 24. In conformance with industry preferences, the helical coil 26 is preferably constructed from stainless steel. However, it is to be understood that the helical coil 26 may be constructed for many other suitable material that is compatible with the cooling fluid.

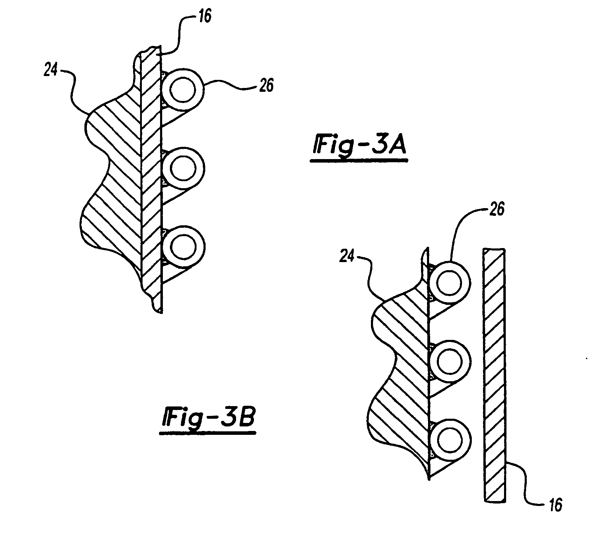

In another arrangement, not according to the present invention, shown in Figure 3A, the wall portion 16 may be arranged immediately adjacent to the magnetic field member 24. The helical coils 26 may be secured to the wall portion 16 there by eliminating the thin shell 34. In the preferred embodiment of the present invention shown in Figure 3B, the helical coils 26 are arranged immediately adjacent to the magnetic field generator 24 and in proximity to the wall portion 16.

In the embodiment shown in Figure 3B, the cooling coils 26 is brazed to the magnetic field generator 24.

By utilizing the helical coils of the present invention, the large stainless steel housing and external wall of the prior art may be eliminated thereby reducing the overall cost of the electromechanical device.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A cooling assembly for an electromechanical device (10), the assembly comprising:
a housing (12) having a wall portion (16);
a magnetic field member (24) disposed within said housing (12) and arranged adjacent said wall portion (16); and
a shaft (20) having windings (22) located within said magnetic field member (24) with an electrical current flowing through said windings (22) coacting with said magnetic field member (24), wherein at least one of said magnetic field member (24) and said windings (22) produces heat;
a helical cooling coil (26) defining a fluid conduit arranged adjacent said magnetic field member (24) for removing said heat, said helical cooling coil (26) disposed between said wall portion (16) and said magnetic field member (24), **characterised in that**:
said helical cooling coil (26) is brazed to said magnetic field member (24).

2. The assembly according to claim 1, wherein said helical cooling coil is constructed from stainless steel.

3. The assembly according to claim 1 or 2, wherein said shaft (20) rotates in response to a magnetic field generated by said magnetic field member (24).

4. The assembly according to any preceding claim, wherein rotation of said shaft (20) produces a current in said magnetic field member (24).

5. The assembly according to any preceding claim, wherein said helical cooling coil (26) is spaced apart from said wall portion (16).

6. A method of cooling an electromechanical device (10) comprising the steps of:
a) producing heat in a magnetic field member (24) of the electromechanical device (10) having a temperature; and
b) absorbing the heat in a fluid to reduce the temperature,
wherein said fluid is pumped through a helical coil (26) arranged between the magnetic field member (24) and a wall portion (16) of the electromechanical device (10),
**characterised in that**:
said helical coil (26) is brazed to the magnetic field member (24).

7. The method according to claim 6, wherein the electromechanical device (10) is an electric motor.

8. The method according to claim 6, wherein the electromechanical device (10) is a generator.

## Patentansprüche

1. Kühlanordnung für ein elektromechanisches Gerät (10), wobei die Anordnung Folgendes aufweist:
ein Gehäuse (12) mit einem Wandbereich (16);
ein Magnetfeldelement (24), das in dem Gehäuse (12) vorgesehen ist und dem Wandbereich (16) benachbart angeordnet ist; und
eine Wicklungen (22) aufweisende Welle (20), die in dem Magnetfeldelement (24) angeordnet ist, wobei durch die Wicklungen (22) ein elektrischer Strom fließt, der mit dem Magnetfeldelement (24) zusammenwirkt, wobei mindestens eines von dem Magnetfeldelement (24) und den Wicklungen (22) Wärme erzeugt;
eine Kühlwendelschlange (26), die einen Fluidkanal bildet, der dem Magnetfeldelement (24) benachbart angeordnet ist, um die Wärme abzuführen,
wobei die Kühlwendelschlange (26) zwischen dem Wandbereich (16) und dem Magnetfeldelement (24) angeordnet ist,
**dadurch gekennzeichnet, dass** die Kühlwendelschlange (26) durch Hartlöten mit dem Magnetfeldelement (24) verbunden ist.

2. Anordnung nach Anspruch 1,
wobei die Kühlwendelschlange aus rostfreiem Stahl gebildet ist.

3. Anordnung nach Anspruch 1 oder 2,
wobei die Welle (20) sich ansprechend auf ein von dem Magnetfeldelement (24) erzeugtes Magnetfeld dreht.

4. Anordnung nach einem der vorausgehenden Ansprüche,
wobei die Drehbewegung der Welle (20) einen Strom in dem Magnetfeldelement (24) erzeugt.

5. Anordnung nach einem der vorausgehenden Ansprüche,
wobei die Kühlwendelschlange (26) von dem Wandbereich (16) beabstandet ist.

6. Verfahren zum Kühlen eines elektromechanischen Geräts (10), wobei das Verfahren folgende Schritte aufweist:
a) Erzeugen von Wärme, die eine Temperatur aufweist, in einem Magnetfeldelement (24) des elektromechanischen Geräts (10); und
b) Absorbieren der Wärme in dem Fluid zum Reduzieren der Temperatur, wobei das Fluid durch eine Wendelschlange (26) gepumpt wird, die zwischen dem Magnetfeldelement (24) und einem Wandbereich (16) des elektromechanischen Geräts (10) angeordnet wird,
**dadurch gekennzeichnet, dass** die Wendelschlange (26) durch Hartlöten mit dem Magnetfeldelement (24) verbunden wird.

7. Verfahren nach Anspruch 6,
wobei das elektromechanische Gerät (10) ein Elektromotor ist.

8. Verfahren nach Anspruch 6,
wobei das elektromechanische Gerät (10) ein Generator ist.

## Revendications

1. Ensemble de refroidissement pour un dispositif électromécanique (10), l'ensemble comprenant :
un logement (12) ayant une portion de paroi (16) ;
un organe de champ magnétique (24) disposé dans ledit logement (12) et agencé de manière adjacente à ladite portion de paroi (16) ; et
un arbre (20) ayant des enroulements (22) situés dans ledit organe de champ magnétique (24), un courant électrique circulant à travers lesdits enroulements (22) agissant conjointement avec ledit organe de champ magnétique (24), où au moins l'un dudit organe de champ magnétique (24) et desdits enroulements (22) produit de la chaleur ;
un serpentin de refroidissement hélicoïdal (26) définissant un conduit de fluide agencé de manière adjacente audit organe de champ magnétique (24) pour éliminer ladite chaleur, ledit serpentin de refroidissement hélicoïdal (26) étant disposé entre ladite portion de paroi (16) et ledit organe de champ magnétique (24), **caractérisé en ce que** :
ledit serpentin de refroidissement hélicoïdal (26) est assemblé par brasage audit organe de champ magnétique (24).

2. Ensemble selon la revendication 1, dans lequel ledit serpentin de refroidissement hélicoïdal est construit à partir d'acier inoxydable.

3. Ensemble selon la revendication 1 ou 2, dans lequel ledit arbre (20) tourne en réponse à un champ magnétique généré par ledit organe de champ magnétique (24).

4. Ensemble selon l'une quelconque des revendications précédentes, dans lequel la rotation dudit arbre (20) produit un courant dans ledit organe de champ magnétique (24).

5. Ensemble selon l'une quelconque des revendications précédentes, dans lequel ledit serpentin de refroidissement hélicoïdal (26) est espacé de ladite portion de paroi (16).

6. Procédé de refroidissement d'un dispositif électromécanique (10), comprenant les étapes suivantes :
a) produire de la chaleur dans un organe de champ magnétique (24) du dispositif électromécanique (10) ayant une température ; et
b) absorber la chaleur dans un fluide pour réduire la température, où ledit fluide est pompé à travers un serpentin hélicoïdal (26) agencé entre l'organe de champ magnétique (24) et une portion de paroi (16) du dispositif électromécanique (10),
**caractérisé en ce que** :
ledit serpentin hélicoïdal (26) est assemblé par brasage à l'organe de champ magnétique (24).

7. Procédé selon la revendication 6, dans lequel le dispositif électromécanique (10) est un moteur électrique.

8. Procédé selon la revendication 6, dans lequel le dispositif électromécanique (10) est un générateur.
